# EUROPEAN PATENT SPECIFICATION

(11) **EP 4 439 746 B1**
(45) Date of publication and mention of the grant of the patent: **04.11.2026**
(21) Application number: 22902751.1
(22) Date of filing: 10.06.2022
(51) Int. Cl.: H01M 10/36, H01M 10/02

(54) **AQUEOUS IODINE-BASED BATTERY BASED ON MULTI-ELECTRON TRANSFER**
WÄSSRIGE JOD-BATTERIE AUF DER BASIS VON MULTIELEKTRONENTRANSFER
BATTERIE À BASE D'IODE AQUEUSE BASÉE SUR UN TRANSFERT MULTI-ÉLECTRONS

(30) Priority: 08.12.2021 CN 202111489735
(43) Date of publication of application: 02.10.2024
(73) Proprietor: Dalian Institute Of Chemical Physics, Chinese Academy Of Sciences, Liaoning 116023 (CN)
(72) Inventor: LI, Xianfeng, Dalian, Liaoning 116023 (CN); XIE, Congxin, Dalian, Liaoning 116023 (CN)
(74) Representative: Bayramoglu et al.
(86) International application number: PCT/CN2022/098185
(87) International publication number: WO 2023/103313

(56) References cited:
- WO-A1-2015/026393
- CN-A- 101 567 459
- CN-A- 109 755 604
- CN-A- 109 755 604
- CN-A- 110 649 304
- CN-A- 111 509 234
- GB-A- 1 083 922
- US-B2- 11 063 286
- XU Y ET AL: "Study on a single flow acid Cd-chloranil battery", ELECTROCHEMISTRY COMMUNICATIONS, ELSEVIER AMSTERDAM, NL, vol. 11, no. 7, 1 July 2009 (2009-07-01), pages 1422 - 1424, XP026266486, ISSN: 1388-2481, [retrieved on 20090518], DOI: 10.1016/J.ELECOM.2009.05.021
- ZOU YIPING ET AL: "A four-electron Zn-I2 aqueous battery enabled by reversible I-/I2/I+ conversion", NATURE COMMUNICATIONS, vol. 12, no. 1, 8 January 2021 (2021-01-08), UK, XP093321736, ISSN: 2041-1723, DOI: 10.1038/s41467-020-20331-9
- WANG ZHIQIAN ET AL: "Development of iodate-based high oxidation state cathode for aqueous battery system", MATERIALS CHEMISTRY AND PHYSICS, vol. 273, 1 November 2021 (2021-11-01), Switzerland, Taiwan, Republic of China, pages 125070, XP093321737, ISSN: 0254-0584, DOI: 10.1016/j.matchemphys.2021.125070
- WENG GUO-MING ET AL: "Unlocking the capacity of iodide for high-energy-density zinc/polyiodide and lithium/polyiodide redox flow batteries", ENERGY & ENVIRONMENTAL SCIENCE, vol. 10, no. 3, 1 January 2017 (2017-01-01), Cambridge, pages 735 - 741, XP093321738, ISSN: 1754-5692, DOI: 10.1039/C6EE03554J
- JIAN Q P ET AL: "A trifunctional electrolyte for high-performance zinc-iodine flow batteries", JOURNAL OF POWER SOURCES, ELSEVIER, AMSTERDAM, NL, vol. 484, 28 November 2020 (2020-11-28), XP086424219, ISSN: 0378-7753, [retrieved on 20201128], DOI: 10.1016/J.JPOWSOUR.2020.229238

## Description

### TECHNICAL FIELD

The present application relates to the field of battery, in particular to the field of multi-electron transfer aqueous iodine-based battery.

### BACKGROUND

The large-scale utilization of fossil energy has caused environmental pollution and energy crisis; therefore, the development and utilization of renewable energy is the key to solve the above problems. The promotion of electric vehicles is an important means to solve the fossil energy crisis. But at present, lithium-ion batteries are mainly use in electric vehicles; although the energy density of lithium-ion batteries is very high (about 300 Wh/L), but due to the use of organic electrolyte, it will bring about flammable and explosive problems. Aqueous batteries have good application prospects due to their high safety and power density. However, at present, the energy density of aqueous batteries is generally low, thus making it difficult to be used in the field of power batteries. The applicant has previously developed a multi-electron transfer aqueous iodine-based battery, in which I⁻ in the positive electrolyte can electrochemically react to generate I₂ under a strong acidic environment, and the I₂ in turn charges to IO₃⁻ to realize a six-electron transfer. And the high solubility of I⁻ enables a quantum leap in the energy density of the battery. However, the multi-electron transfer process faces serious electrochemical polarization problems. In the charging process, the electrochemical process of I₂ to generate IO₃⁻ needs to undergo a five-electron transfers and requires multiple H₂O to participate in the reaction, and the positive charge center of symmetric I₂ is difficult to be attacked by the oxygen of H₂O molecular, so that the charging reaction has a high polarization; for the discharging process, IO₃⁻ is structurally stable and has a large size, so that it is difficult to discharge directly on the electrode surface, and only indirect discharge can be achieved by oxidizing I⁻ in the solution to form I₂ by IO₃⁻. However, since the electrode potential of I₂/I⁻ (0.54 V vs. SHE) is much lower than that of IO₃⁻/I₂ (1.19 V vs. SHE), the discharging process is also highly polarized. US11063286B2 discloses a rechargeable tin-iodate battery comprising a tin anode, a carbon cathode and acidic aqueous electrolytes, in which iodate species are reduced to iodine/iodide during discharge and re-oxidised during charge.u et al., Electrochemistry Communications (2009), discloses a single-flow acid cadmium-based battery system using an aqueous sulphuric acid electrolyte containing Cd²⁺, in which cadmium is deposited and dissolved at the negative electrode and an organic redox compound is used at the positive electrode. CN109755604A discloses a zinc-iodine flow battery employing a circulating electrolyte containing iodine species and a membrane separating the electrodes to enable ionic conduction while limiting crossover of polyiodide species.

### SUMMARY

Iodine based secondary battery based on multi-electron transfer comprising a positive electrolyte and a negative electrolyte, where the positive electrolyte and the negative electrolyte both comprise a strong acidic aqueous solutions containing Cd²⁺ and I⁻, and a Br⁻ and/or Cl⁻ source additive, respectively.

A source of the I⁻ in the positive electrolyte and the negative electrolyte is or more selected from HI, KI, NaI, or CdI₂, respectively; a source of the Cd²⁺ is one or two selected from CdI₂ or CdSO₄, respectively; and a supporting electrolyte in the electrolytes is H₂SO₄ to ensure a strong acidic environment.

In the positive electrolyte or negative electrolyte, a molar concentration of Cd²⁺ is from 0.5M to 3M, a molar concentration of I⁻ is from 1M to 6M, a molar ratio of Cd²⁺ to I⁻ is 1:2 to 1:1, and a molar concentration of H⁺ is from 3M to 12M, respectively; preferably, the molar ratio of Cd²⁺ to I⁻ is 1:2.

During charging process, IO⁻ generated from I⁻ at positive electrode can form a Cd(IO₃)₂ precipitate with Cd²⁺ in the solution, thus solving a problem of self-discharge of the battery due to the infiltration of oxidized charging product IO₃⁻.

Additives are added to the positive electrolyte and the negative electrolyte to reduce the polarization problem in the electrochemical process, respectively, and the additives are mainly for the purpose of introducing Br⁻ and/or Cl⁻. The Br⁻ source additive is one or two or more selected from NaBr, KBr or HBr; the Cl⁻ source additive is one or two or more of NaCl, KCl or HCl; and a concentration of the introduced additives is from 1M to 3M.

A composition of the positive electrolyte and the negative electrolyte are as follows respectively:
HI used as an iodine-based active substance with a concentration of 1M to 6M (preferably 6M); HBr and/or HCl used as additive with a concentration of 1M to 3M (preferably 3M); H₂SO₄ used as a support electrolyte with a concentration of 1M to 3M (preferably 1M); CdSO₄ used as an active substance of Cd with a concentration of 1M to 3M (preferably 3M); or
HI used as an iodine-based active substance with a concentration of 1M to 6M (preferably 6M); one or two or more of NaBr, KBr, NaCl, and KCl used as additive with a concentration of 1M to 3M (preferably 3M); H₂SO₄ used as a support electrolyte with a concentration of 2M to 4M (preferably 2M); CdSO₄ used as an active substance of Cd with a concentration of 1M to 3M (preferably 3M); or
CdI₂ used as an active substance with a concentration of 0.5M to 3M (preferably 3M); HBr and/or HCl used as additive with a concentration of 1M to 3M (preferably 3M); H₂SO₄ used as a support electrolyte with a concentration of 2M to 4M (preferably 4M); or
CdI₂ used as an active substance with a concentration of 0.5M to 3M (preferably 3M); one or two or more of NaBr, KBr, NaCl, and KCl used as additive with a concentration of 1M to 3M (preferably 3M); H₂SO₄ used as a support electrolyte with a concentration of 3M to 5M (preferably 5M); or
NaI and/or KI used as an active substance with a concentration of 1M to 6M (preferably 6M); HBr and/or HCl used as additive with a concentration of 1M to 3M (preferably 3M); H₂SO₄ used as a support electrolyte with a concentration of 2M to 4M (preferably 4M); CdSO₄ used as an active substance of Cd with a concentration of 1M to 3M (preferably 3M); or
NaI and/or KI used as an active substance with a concentration of 1M to 6M (preferably 6M); one or two or more of NaBr, KBr, NaCl, and KCl used as additive with a concentration of 1M to 3M (preferably 3M); H₂SO₄ used as a support electrolyte with a concentration of 3M to 5M (preferably 5M); CdSO₄ used as an active substance of Cd with a concentration of 1M to 3M (preferably 3M).

The battery comprises a positive electrode, a negative electrode, a membrane material, and the electrolyte, where the electrolyte of positive and negative are strong acidic aqueous solutions containing Cd²⁺ and I⁻, and the additive need to be introduced into the electrolyte to improve the kinetics and reversibility of an electrochemical reaction process; the membrane material of the battery is a polymer material, which is one or more of PES, PVC, PSF, PE, or Nafion, and preferably Nafion resin.

The battery includes single cell or stacks; a structure of the single cell includes a positive terminal plate, a positive current collector, a positive carbon felt electrode filled with the positive electrolyte, a separator, a negative carbon felt electrode filled with the negative electrolyte, a negative current collector, and a negative terminal plate stacked in a sequential; the stack is composed of two or more single cell circuits in series and/or parallel.

When the battery is charged, I⁻ in the positive electrolyte generates I₂ at the porous electrode and then continues to be charged to generate iodine interhalogen compounds such as IBr/ICl, and then continues to be charged and eventually generates IO₃⁻ and forms Cd(IO₃)₂ with Cd²⁺; Cd²⁺ in the negative electrolyte is reduced to metal Cd. For the discharging process, the discharging process at the positive electrode is an indirect discharge of Cd(IO₃)₂ through a chemical-oxidation-electrochemical reaction and finally discharge to generate I⁻; while the discharging reaction at the negative electrode is the generation of Cd²⁺ from metal Cd.

Beneficial effects that can be produced by the present application include:
The present invention introduces other halogen ions (Br⁻ or Cl⁻) as additives in the electrolyte, which can well improve the electrochemical activity and reversibility of the electrolyte. The formation of interhalogen compounds (IBr/ICl) between halogens with different electronegativities (I₂ and Br₂ or I₂ and Cl₂) facilitates the attack of water molecules on the positive charge centers, and thus reducing the polarization of the charging. For example, Cl⁻ or Br⁻ is introduced into the solution as an additive, and I² is able to generate interhalogen compounds, such as ICl or IBr, with Br₂ or Cl₂ during the electrochemical reaction; compared to the symmetric molecule I₂, the positive charge of ICl or IBr is mainly concentrated on iodine atoms, and therefore, during the charging process, the oxygen atoms of H₂O are more likely to attack them thereby favoring the generation of IO₃⁻, and the generated IO₃⁻ can form Cd(IO₃)₂ with Cd²⁺, thus avoiding self-discharge caused by the infiltration of IO₃⁻ and reducing the electrochemical polarization of charging. For the discharging process, IO₃⁻ chemically oxidizes other halogen ions such as Cl⁻/Br⁻to from IBr, Br₂ or ICl, Cl₂, and in turn, indirect discharge can be realized by the reduction of IBr, Br₂ or ICl, Cl₂ on the electrode surface. In addition, halogens with higher electronegativity have higher electrode potentials, e.g., the electrode potential of Br₂/Br⁻ is about 1.08 V, which is slightly lower than the electrode potential of I₂/IO₃⁻ of 1.19 V. Therefore, the IO₃⁻ can easily oxidize Br⁻ to monomeric bromine, and the potential difference between the two is relatively small (much smaller than the potential difference between IO₃⁻/I₂ (1.19V vs. SHE) and I₂/I⁻ (0.54 V vs. SHE)), which can effectively reduce the discharge polarization of the battery. The system realizes a reversible six-electron transfer reaction of I⁻/IO₃⁻ in a strong acidic medium, which leads to an extremely high energy density by increasing the electron transfer number and combining it with a high concentration of electrolyte.

### BRIEF DESCRIPTION OF THE DRAWINGS

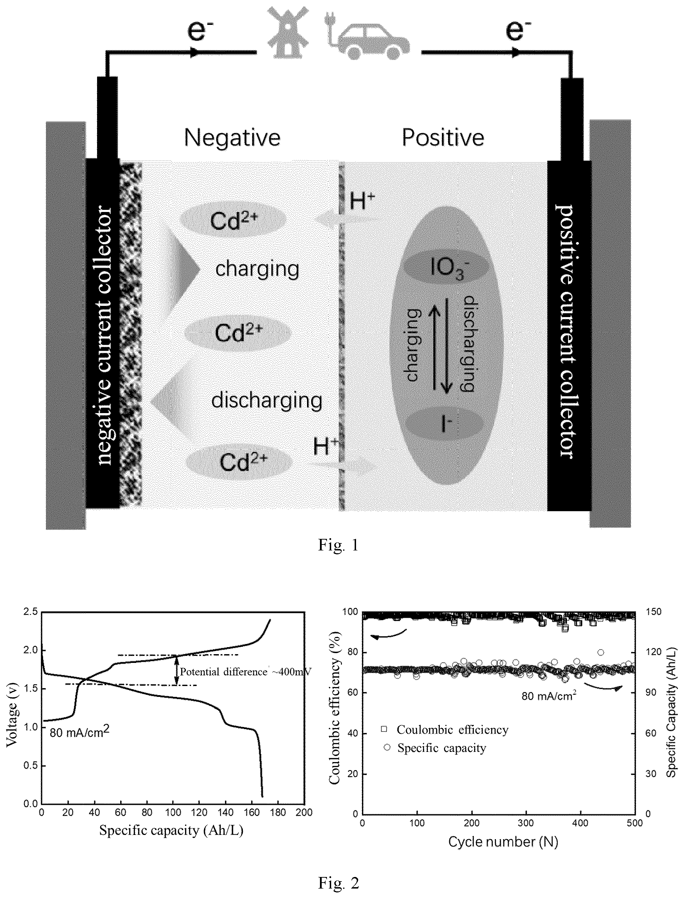

Fig. 1 is a structure diagram of a multi-electron transfer aqueous iodine-based battery system.
Fig. 2 shows the charge/discharge curves and cycle performance of the assembled battery of Example 1. The composition of the electrolytes is 0.5M CdI₂+3M H₂SO₄+1M HBr. The working current density of the battery is 80 mA/cm² and the membrane material is Nafion 115 membrane. The energy density of the battery at a current density of 80 mA/cm² is more than 220 Wh/L, and the energy efficiency is more than 77%; and the battery can run stably for more than 500 cycles with an energy density of 100 Wh/L. The structure of the battery mainly includes: a positive terminal plate, a positive current collector, a positive electrode, a separator, a negative electrode, a negative current collector, and a negative terminal plate. The test conditions of the battery are as follows: charging cut-off condition is double cut-off of voltage and capacity, and discharging cut-off condition is 0.1 V voltage. The charging and discharging processes of the battery are constant current charging and discharging.

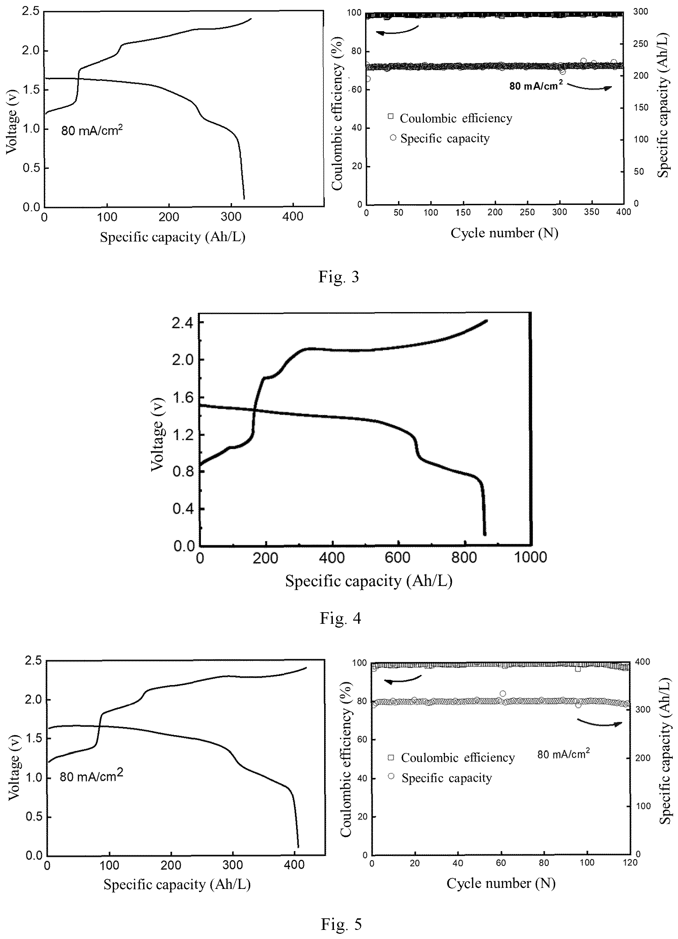

Fig. 3 shows the charge/discharge curves and cycle performance of the assembled battery of Example 2. The composition of the electrolytes is 1M CdI₂+3M H₂SO₄+2M HBr. The working current density of the battery is 80 mA/cm² and the membrane material is Nafion 115 membrane. The energy density of the battery at a current density of 80 mA/cm² is more than 350 Wh/L, and the energy efficiency is more than 77%; and the battery can run stably for more than 400 cycles with an energy density of 220 Wh/L.
Fig. 4 shows the charge/discharge curves and cycle performance of the assembled battery of Example 3. The composition of the electrolytes is 3M CdI₂+3M H₂SO₄+3M HBr and the membrane material is Nafion 115 membrane. The battery can achieve an energy density of over 1100 Wh/L at 40 mA/cm² and an energy efficiency of over 75%.
Fig. 5 shows the charge/discharge curves and cycle performance of the assembled battery of Example 4. The composition of the electrolytes is 3M HI+1.5M CdSO₄+3M H₂SO₄+3M HBr, and the membrane material is Nafion 115 membrane. The battery can achieve an energy density of over 490 Wh/L at 80 mA/cm² and an energy efficiency of over 76%; and the battery can run stably for more than 120 cycles with an energy density of 320 Wh/L.

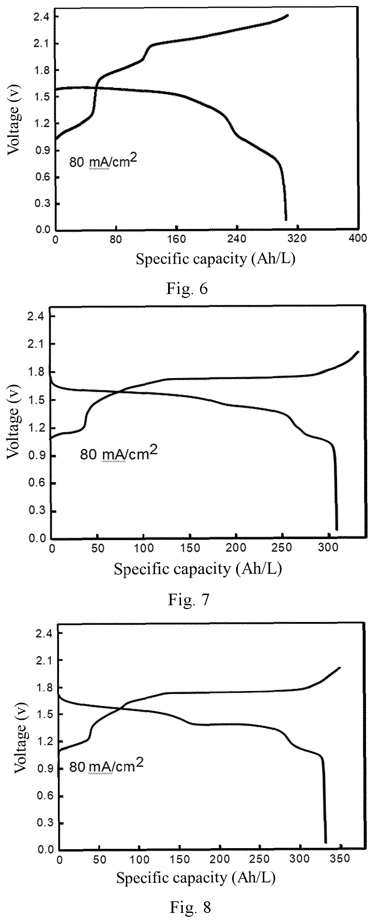

Fig. 6 shows the charge/discharge curves of the assembled battery of Example 5. The composition of the electrolytes is 1M CdI₂+3M H₂SO₄+2M NaBr and the membrane material is Nafion 115 membrane. The battery can achieve an energy density of over 350 Wh/L at 80 mA/cm² and an energy efficiency of over 76%.
Fig. 7 shows a graph of the performance of the assembled battery of Example 6. The composition of the electrolytes is 1M CdI₂+3M H₂SO₄+2M NaCl, the additive was changed from Br⁻ to Cl⁻, and the membrane material is Nafion 115 membrane. The battery can achieve an energy density of over 340 Wh/L at 80 mA/cm² and an energy efficiency of over 76%.
Fig. 8 shows a graph of the performance of the assembled battery of Example 7. The composition of the electrolytes is 1M CdI₂+3M H₂SO₄+2M HCl, and the membrane material is Nafion 115 membrane. The battery can achieve an energy density of over 345 Wh/L at 80 mA/cm² and an energy efficiency of over 76%.

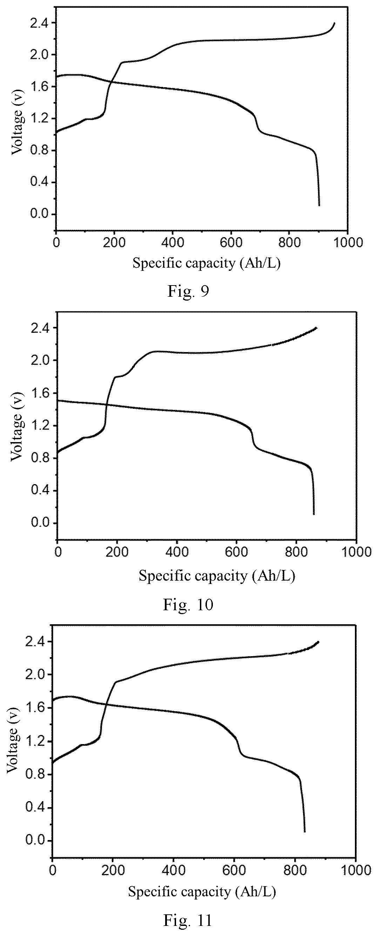

Fig. 9 shows a graph of performance of the assembled battery of Preferred Example 1. The composition of the electrolytes is 6M HI+3M HBr+1M H₂SO₄+3M CdSO₄, and the membrane material is Nafion 115 membrane. The battery can achieve an energy density of over 1050 Wh/L at 80 mA/cm² and an energy efficiency of over 74%.
Fig. 10 shows a graph of performance of the assembled battery of Preferred Example 2. The composition of the electrolytes is 6M HI+3M KCl+2M H₂SO₄+3M CdSO₄, and the membrane material is Nafion 115 membrane. The battery can achieve an energy density of over 1020 Wh/L at 80 mA/cm² and an energy efficiency of over 75%.
Fig. 11 shows a graph of performance of the assembled battery of Preferred Example 3. The composition of the electrolytes is 6M NaI+3M HBr+4M H₂SO₄+3M CdSO₄, and the membrane material is Nafion 115 membrane. The battery can achieve an energy density of over 1060 Wh/L at 80 mA/cm² and an energy efficiency of over 74%.

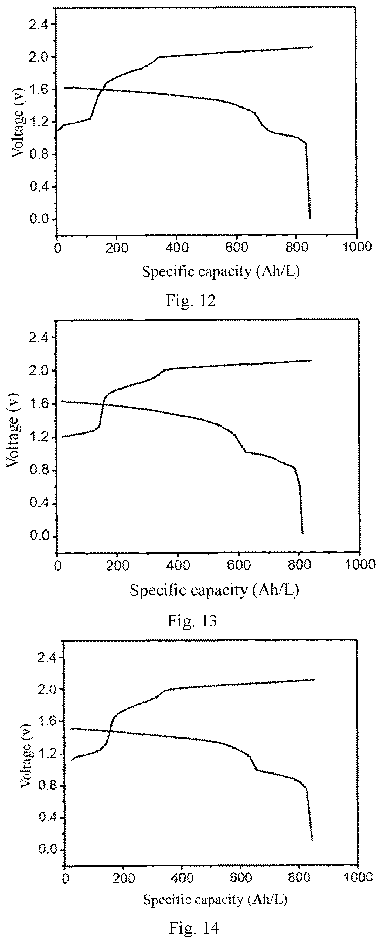

Fig. 12 shows a graph of performance of the assembled battery of Preferred Example 4. The composition of the electrolytes is 6M NaI+3M NaBr+5M H₂SO₄+3M CdSO₄, and the membrane material is Nafion 115 membrane. The battery can achieve an energy density of over 1045 Wh/L at 80 mA/cm² and an energy efficiency of over 76%.
Fig. 13 shows a graph of performance of the assembled battery of Preferred Example 5. The composition of the electrolytes is 6M KI+3M HBr+4M H₂SO₄+3M CdSO₄, and the membrane material is Nafion 115 membrane. The battery can achieve an energy density of over 1074 Wh/L at 80 mA/cm² and an energy efficiency of over 74%.
Fig. 14 shows a graph of performance of the assembled battery of Preferred Example 6. The composition of the electrolytes is 6M KI+3M HBr+4M H₂SO₄+3M CdSO₄, and the membrane material is Nafion 115 membrane. The battery can achieve an energy density of over 1022 Wh/L at 80 mA/cm² and an energy efficiency of over 74%.

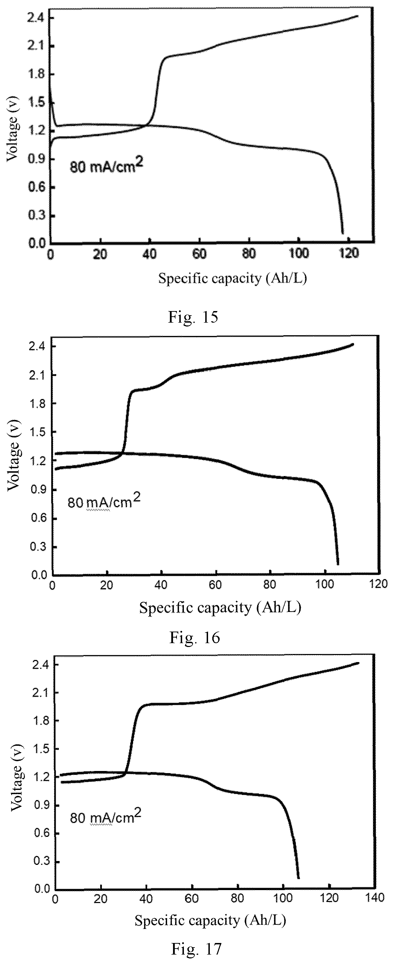

Fig. 15 shows the performance test chart of the multi-electron transfer iodine-based battery assembled in Comparative Example 1. The composition of the electrolytes is 0.5M CdI₂+3M H₂SO₄, the working current density of the battery is 80 mA/cm² and the membrane material is Nafion 115 membrane. However, the polarization of the battery is very severe, with an energy efficiency of only 57%, and due to the influence of polarization, the energy density of the battery is relatively low, only 114 Wh/L.
Fig. 16 shows the performance test chart of the multi-electron transfer iodine-based battery assembled in Comparative Example 2. The composition of the electrolytes is 0.5M CdI₂+3M H₂SO₄+0.1M HBr, the working current density of the battery is 80 mA/cm² and the membrane material is Nafion 115 membrane. Due to the low concentration of HBr, the polarization of the battery is severe, and the energy efficiency is only 54%, and the energy density of the battery is limited, only 104 Wh/L.
Fig. 17 shows the performance test chart of the battery assembled in Comparative Example 3. The composition of the electrolytes is 1M HI+3M H₂SO₄+1M HBr+0.2M CdSO₄. The working current density of the battery is 80 mA/cm² and the membrane material is Nafion 115 membrane. Due to Cd²⁺: I⁻=1:5 in the solution, the generated IO₃⁻ cannot form Cd(IO₃)₂ precipitate with Cd²⁺, resulting in severe electrolyte crossover. Therefore, the Coulombic efficiency of the battery is relatively low, with an energy efficiency of nearly 60% and an energy density of only about 103Wh/L.

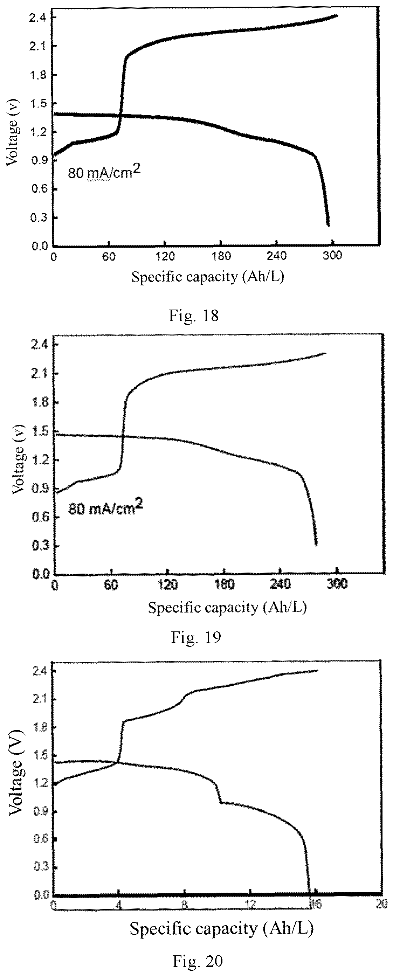

Fig. 18 shows the performance test chart of the battery assembled in Comparative Example 4. The composition of the electrolytes is 0.5M CdI₂+1M HBr. The working current density of the battery is 80 mA/cm² and the membrane material is Nafion 115 membrane. Although HBr is added as an additive, the low concentration of H⁺ in the solution will affect the chemical reaction rate of IO₃⁻ oxidizing Br⁻, ultimately affecting the energy efficiency of the battery. The test results show that the energy efficiency of the battery at 80 mA/cm² is only 65% and the energy density is lower than 150 Wh/L.
Fig. 19 shows the performance test chart of the battery assembled in Comparative Example 5. The composition of the electrolytes is 0.5M CdI₂+0.5M H₂SO₄+1M HBr. The working current density of the battery is 80 mA/cm² and the membrane material is Nafion 115 membrane. Similar to Comparative Example 4, although HBr is added as an additive and some H₂SO₄ is added as a supporting electrolyte, the H⁺ concentration is still low, so the reaction rate of IO₃⁻ oxidizing Br⁻is slow, and as a result, the polarization of the battery is still severe and the efficiency of the battery is only 70%.
Fig. 20 shows the performance test chart of the battery assembled in Comparative Example 6. The composition of the electrolytes is 0.1M CdI₂+3M H₂SO₄+1M HBr. The working current density of the battery is 80 mA/cm² and the membrane material is Nafion 115 membrane. However, in this electrolyte system, due to the low concentration of CdI₂, less IO₃⁻ is generated, for which it is difficult to chemically react with Br⁻ during discharging to achieve indirect discharge. Therefore, the polarization of the battery is still relatively high. The test results show that at 80 mA/cm², the energy efficiency of the battery is only 64%.

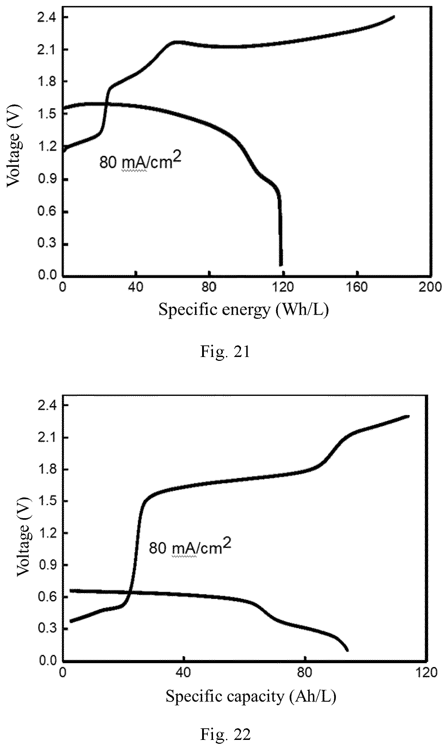

Fig. 21 shows the performance test chart of the battery assembled in Comparative Example 7. The composition of the electrolytes is 0.5M CdI₂+3M H₂SO₄+1M HBr. The working current density of the battery is 80 mA/cm² and the membrane material is PE porous film. Compared to Nafion 115 membrane, PE porous membrane has a weaker barrier ability to the positive electrode charging products, resulting in severe infiltration of the positive electrolyte and low Coulombic efficiency of the battery. The test results of the battery indicate that the energy density of the battery is only 52%.
Fig. 22 shows the performance test chart of the battery assembled in Comparative Example 8. The composition of the electrolytes is 1M HI+3M H₂SO₄+1M TiOSO₄. The working current density of the battery is 80 mA/cm² and the membrane material is Nafion 115 membrane. Compared to the Cd²⁺/Cd negative electrode, the Ti³⁺/Ti⁴⁺ electrode used as the negative electrode of the battery has very poor performance. This is mainly due to the low activity of TiO(IO₃)₂ generated by IO₃⁻ and TiO²⁺, making it difficult to oxidize Br⁻, and the energy efficiency of the battery is only 32%.

### DETAILED DESCRIPTION OF THE EMBODIMENTS

Performance testing of a multi-electron transfer iodine-based aqueous battery was conducted with a charging current density of 80 mA/cm², one or both of a battery charging cut-off voltage of 2.4 V or a specific capacity, and a discharge cut-off voltage of 0.1 V. The carbon felts on both sides of the positive and negative electrodes of the battery were 1 mm, with a surface area of 48 cm², and the volume of electrolyte on the positive side of the battery was 5 mL, and on the negative side of the battery was 15 mL, where the electrolyte on both sides of the battery was adsorbed inside the porous carbon felts. The membrane material for the battery is Nafion 115 membrane. The positive and negative electrolytes are the same.

Fig. 2 to Fig.5 (Examples 1-4) show the charging and discharging curves and cycle performance tests of the battery under the optimal conditions; as the electrolyte concentration increases, the energy density of the battery rises to 1100 Wh/L from 220 Wh/L at 1M. In addition, by maintaining a constant capacity of four electrons for charging and discharging, the battery can operate stably for a maximum of more than 500 cycles.

Compared to electrolytes with HBr as an additive, replacing HBr in the solution with NaBr, HCl, or NaCl (corresponding to Fig. 6 to Fig. 8 in Examples 5-7) can also achieve higher electrochemical activity. This is mainly due to the formation of iodine interhalogen compounds IBr/ICl during the charging process, which can also reduce charging polarization. For the discharging process, IO₃⁻ can oxidize Br⁻/Cl⁻ to achieve indirect discharge and increase the discharge voltage of the battery. Therefore, the energy efficiency of the electrolyte system with the above additives can also achieve an energy efficiency of >75%.

Increasing the concentration of the electrolyte to 6M (the most preferred electrolyte composition, Preferred Examples 1-6, corresponding to Fig.9 to Fig.14), the energy density of the battery is about 1100 Wh/L, and the efficiency exceeds 74%. This indicates that the most preferred electrolyte has a significant advantage in terms of energy density.

Compared to electrolyte systems with additives, electrolytes with lower additive concentrations or without additives exhibit severe polarization, the performance of the battery is lower (Comparative Examples 1-2; Fig 15 and 16), and the energy efficiency of the battery is less than 60%.

Compared with the electrolyte systems with a higher concentration of Cd²⁺, the low concentration of Cd²⁺ makes it difficult to completely precipitate with IO₃⁻ in the solution; the self-discharge of the battery is serious, the performance of the battery is low (Comparative Example 3; Fig. 17), and the energy efficiency of the battery is lower than 60%.

Reducing the concentration of H⁺ in the solution will also decrease the performance of the battery, mainly because the reduction in the concentration of H⁺ causes a decrease in the oxidizability of IO₃⁻ in the electrolyte, which decrease the rate of oxidizing Br⁻ in the solution (Comparative Examples 4-5; Figs. 18-19).

By reducing the concentration of I⁻ in the solution, the efficiency of the battery also significantly decreases. This is mainly because as the concentration of I⁻ decreases, the rate of IO₃⁻ chemical oxidizing Br- or Cl- in the electrolyte during charging and discharging is limited. Therefore, the energy efficiency of the battery is only about 64% (Comparative Example 6; Fig. 20).

Replacing Nafion 115 membrane with PE polyolefin porous membrane resulted in a low Coulombic efficiency of the battery due to severe electrolyte crossover (Comparative Example 7; Fig. 21).

By replacing the Cd²⁺/Cd negative electrode of the battery with Ti³⁺/Ti⁴⁺, the IO₃⁻ generated from I⁻ oxidation generate TiO(IO₃)₂ with TiO²⁺. Due to the slow rate of chemical oxidation of Br⁻or Cl⁻ by TiO(IO₃)₂, the efficiency and energy density of the battery are low (Comparative Example 8; Fig. 22).

**Table 1: Examples of iodine based multi-electron transfer battery system**

| Examples | Composition of electrolyte (mol/L) | Energy density (Wh/L) | Current density (mA/cm²) | Membrane material | Energy efficiency EE(%) |
|---|---|---|---|---|---|
| 1 | 0.5M CdI₂, 1M HBr, 3M H₂SO₄ | 220 | 80 | Nafion115 | 78% |
| 2 | 1M CdI₂, 2M HBr, 3M H₂SO₄ | 350 | 80 | Nafion115 | 77% |
| 3 | 3M CdI₂, 3M HBr, 3M H₂SO₄ | 1100 | 40 | Nafion115 | 75% |
| 4 | 3M HI, 1.5M CdSO₄, 3M HBr, 3M H₂SO₄ | 490 | 80 | Nafion115 | 76% |
| 5 | 1M CdI₂, 2M NaBr, 3M H₂SO₄ | 350 | 80 | Nafion115 | 76% |
| 6 | 1M CdI₂, 2M NaCl, 3M H₂SO₄ | 340 | 80 | Nafion115 | 76% |
| 7 | 1M CdI₂, 2M HCl, 3M H₂SO₄ | 345 | 80 | Nafion115 | 76% |

**Table 2: Preferred examples of iodine based multi-electron transfer battery system**

| Preferred examples | Composition of electrolyte (mol/L) | Energy density (Wh/L) | Working current density (mA/cm²) | Membrane material | Energy efficiency EE(%) |
|---|---|---|---|---|---|
| 1 | 6M HI, 3M HBr, 1M H₂SO₄, 3M CdSO₄ | 1050 | 80 | Nafion115 | 74% |
| 2 | 6M HI, 3M KCl, 2M H₂SO₄, 3M CdSO₄ | 1020 | 80 | Nafion115 | 75% |
| 3 | 6M NaI, 3M HBr, 4M H₂SO₄, 3M CdSO₄ | 1060 | 80 | Nafion115 | 74% |
| 4 | 6M NaI, 3M NaBr, 5M H₂SO₄, 3M CdSO₄ | 1045 | 80 | Nafion115 | 76% |
| 5 | 6M KI, 3M HBr, 4M H₂SO₄, 3M CdSO₄ | 1074 | 80 | Nafion115 | 74% |
| 6 | 6M KI, 3M HBr, 4M H₂SO₄, 3M CdSO₄ | 1022 | 80 | Nafion115 | 74% |

**Table 3: Comparative examples of iodine based multi-electron transfer battery system**

| Comparative examples | Composition of electrolyte (mol/L) | Energy density (Wh/L) | Working current density (mA/cm²) | Membrane material | Energy efficiency EE(%) |
|---|---|---|---|---|---|
| 1 | 0.5M CdI₂, 3M H₂SO₄ | 114 | 80 | Nafion115 | 57% |
| 2 | 0.5M CdI₂, 3M H₂SO₄, 0.1M HBr | 104 | 80 | Nafion115 | 54% |
| 3 | 1M HI, 3M H₂SO₄, 1M HBr, 0.2M CdSO₄ | 103 | 80 | Nafion115 | 60% |
| 4 | 0.5M CdI₂, 1M HBr | 150 | 80 | Nafion115 | 65% |
| 5 | 0.5M CdI₂, 1M HBr, 0.5M H₂SO₄ | 170 | 80 | Nafion115 | 70% |
| 6 | 0.1M CdI₂, 1M HBr, 3M H₂SO₄ | 15 | 80 | Nafion115 | 64% |
| 7 | 0.5M CdI₂, 1M HBr, 3M H₂SO₄ | 150 | 80 | PE porous film | 52% |
| 8 | 1M HI, 3M H₂SO₄, 1M TiOSO₄ | 50 | 80 | Nafion115 | 32% |

The above embodiments are merely some of the embodiments of the present application, and do not limit the present application in any form. Although the present application is disclosed above with the preferred embodiments, the present application is not limited thereto.

## Claims

1. An aqueous iodine-based battery based on multi-electron transfer comprising a positive electrolyte and a negative electrolyte, wherein the positive electrolyte and the negative electrolyte both comprise a strong acidic aqueous solution containing Cd²⁺ and I⁻, and a Br⁻ and/or Cl⁻ source additive;
wherein a source of the I⁻ in the positive electrolyte and the negative electrolyte is one or more selected from HI, KI, NaI, and CdI₂; a source of the Cd²⁺ is one or two selected from CdI₂ or CdSO₄; and a supporting electrolyte in the electrolytes is H₂SO₄;
wherein in the positive electrolyte or negative electrolyte, a molar concentration of Cd²⁺ is from 0.5M to 3M, a molar concentration of I⁻ is from 1M to 6M, a molar ratio of Cd²⁺ to I⁻ is 1:2 to 1:1, and a molar concentration of H⁺ is from 3M to 12M; and
wherein the Br⁻ source additive is one or more selected from NaBr, KBr or HBr; the Cl⁻source additive is one or more selected from NaCl, KCl or HCl with a total molar concentration of the additives being from 1M to 3M.

2. The battery according to claim 1, wherein the molar ratio of Cd²⁺ to I⁻ is 1:2.

3. The battery according to claim 1, wherein a composition of the positive electrolyte and the negative electrolyte is selected from one of the following six Schemes:
Scheme 1: HI as an iodine-based active substance with a concentration of 1M to 6M; HBr and/or HCl as additive with a concentration of 1M to 3M; H₂SO₄ as a support electrolyte with a concentration of 1M to 3M; CdSO₄ as an active substance of Cd with a concentration of 1M to 3M; or
Scheme 2: HI as an iodine-based active substance with a concentration of 1M to 6M; one or two or more of NaBr, KBr, NaCl, and KCl as additive with a concentration of 1M to 3M; H₂SO₄ as a support electrolyte with a concentration of 2M to 4M; CdSO₄ as an active substance of Cd with a concentration of 1M to 3M; or
Scheme 3: CdI₂ as an active substance with a concentration of 0.5M to 3M; HBr and/or HCl as additive with a concentration of 1M to 3M; H₂SO₄ as a support electrolyte with a concentration of 2M to 4M; or
Scheme 4: CdI₂ as an active substance with a concentration of 0.5M to 3M; one or two or more of NaBr, KBr, NaCl, and KCl as additive with a concentration of 1M to 3M; H₂SO₄ as a support electrolyte with a concentration of 3M to 5M; or
Scheme 5: NaI and/or KI as an active substance with a concentration of 1M to 6M; HBr and/or HCl as additive with a concentration of 1M to 3M; H₂SO₄ as a support electrolyte with a concentration of 2M to 4M; CdSO₄ as an active substance of Cd with a concentration of 1M to 3M; or
Scheme 6: NaI and/or KI as an active substance with a concentration of 1M to 6M; one or two or more of NaBr, KBr, NaCl, and KCl as additive with a concentration of 1M to 3M; H₂SO₄ as a support electrolyte with a concentration of 3M to 5M; CdSO₄ as an active substance of Cd with a concentration of 1M to 3M.

4. The battery according to claim 3, wherein a composition of the positive electrolyte and the negative electrolyte is selected from one of the following six Schemes:
Scheme 1: HI used as an iodine-based active substance with a concentration of 6M; HBr and/or HCl used as additive with a concentration of 3M; H₂SO₄ used as a support electrolyte with a concentration of 1M; CdSO₄ used as an active substance of Cd with a concentration of 3M; or
Scheme 2: HI used as an iodine-based active substance with a concentration of 6M; one or two or more of NaBr, KBr, NaCl, and KCl used as additive with a concentration of 3M; H₂SO₄ used as a support electrolyte with a concentration of 2M; CdSO₄ used as an active substance of Cd with a concentration of 3M; or
Scheme 3: CdI₂ used as an active substance with a concentration of 3M; HBr and/or HCl used as additive with a concentration of 3M; H₂SO₄ used as a support electrolyte with a concentration of 4M; or
Scheme 4: CdI₂ used as an active substance with a concentration of 3M; one or two or more of NaBr, KBr, NaCl, and KCl used as additive with a concentration of 3M; H₂SO₄ used as a support electrolyte with a concentration of 5M; or
Scheme 5: NaI and/or KI used as an active substance with a concentration of 6M; HBr and/or HCl used as additive with a concentration of 3M; H₂SO₄ used as a support electrolyte with a concentration of 4M; CdSO₄ used as an active substance of Cd with a concentration of 3M; or
Scheme 6: NaI and/or KI used as an active substance with a concentration of 6M; one or two or more of NaBr, KBr, NaCl, and KCl used as additive with a concentration of 3M; H₂SO₄ used as a support electrolyte with a concentration of 5M; CdSO₄ used as an active substance of Cd with a concentration of 3M.

5. The battery according to any one of claims 1 to 4, wherein the battery comprises a positive electrode, a negative electrode, a membrane material, and the electrolyte, wherein the membrane material is a polymer material selected from one or more of PES, PVC, PSF, PE, and Nafion.

6. The battery according to claim 1, wherein the battery includes single cell or stacks;
a structure of the single cell includes a positive terminal plate, a positive current collector, a positive carbon felt electrode filled with the positive electrolyte, a separator, a negative carbon felt electrode filled with the negative electrolyte, a negative current collector, and a negative terminal plate stacked in a sequential;
the stack is composed of two or more single cell circuits in series and/or parallel.

## Patentansprüche

1. Wässrige iodbasierte Batterie auf der Grundlage von Mehrelektronentransfer, umfassend einen positiven Elektrolyten und einen negativen Elektrolyten, wobei der positive Elektrolyt und der negative Elektrolyt beide stark saure wässrige Lösungen enthalten, die Cd²⁺ und I⁻ sowie ein Br⁻- und/oder Cl⁻-Quelladditiv enthalten;
wobei eine Quelle von I⁻ in dem positiven Elektrolyten und dem negativen Elektrolyten ausgewählt ist aus einem oder mehreren von HI, KI, NaI und CdI₂; eine Quelle von Cd²⁺ ausgewählt ist aus einem oder beiden von CdI₂ oder CdSO₄; und ein Stützelektrolyt in den Elektrolyten H₂SO₄ ist;
wobei in dem positiven Elektrolyten oder negativen Elektrolyten eine molare Konzentration von Cd²⁺ von 0,5 M bis 3 M beträgt, eine molare Konzentration von I⁻ von 1 M bis 6 M beträgt, ein molares Verhältnis von Cd²⁺ zu I⁻ von 1:2 bis 1:1 beträgt und eine molare Konzentration von H⁺ von 3 M bis 12 M beträgt; und
wobei das Br⁻-Quelladditiv ausgewählt ist aus einem oder mehreren von NaBr, KBr oder HBr; das Cl⁻-Quelladditiv ausgewählt ist aus einem oder mehreren von NaCl, KCl oder HCl, mit einer gesamten molaren Konzentration der Additive von 1 M bis 3 M.

2. Batterie nach Anspruch 1, wobei das molare Verhältnis von Cd²⁺ zu I⁻ 1:2 beträgt.

3. Batterie nach Anspruch 1, wobei eine Zusammensetzung des positiven Elektrolyten und des negativen Elektrolyten ausgewählt ist aus einem der folgenden sechs Schemata:
Schema 1: HI als iodbasierte aktive Substanz mit einer Konzentration von 1 M bis 6 M; HBr und/oder HCl als Additiv mit einer Konzentration von 1 M bis 3 M; H₂SO₄ als Stützelektrolyt mit einer Konzentration von 1 M bis 3 M; CdSO₄ als aktive Substanz von Cd mit einer Konzentration von 1 M bis 3 M; oder
Schema 2: HI als iodbasierte aktive Substanz mit einer Konzentration von 1 M bis 6 M; eine oder zwei oder mehrere der Substanzen aus der Gruppe NaBr, KBr, NaCl und KCl als Additiv mit einer Konzentration von 1 M bis 3 M; H₂SO₄ als Stützelektrolyt mit einer Konzentration von 2 M bis 4 M; CdSO₄ als aktive Substanz von Cd mit einer Konzentration von 1 M bis 3 M; oder
Schema 3: CdI₂ als aktive Substanz mit einer Konzentration von 0,5 M bis 3 M; HBr und/oder HCl als Additiv mit einer Konzentration von 1 M bis 3 M; H₂SO₄ als Stützelektrolyt mit einer Konzentration von 2 M bis 4 M; oder
Schema 4: CdI₂ als aktive Substanz mit einer Konzentration von 0,5 M bis 3 M; eine oder zwei oder mehrere der Substanzen aus der Gruppe NaBr, KBr, NaCl und KCl als Additiv mit einer Konzentration von 1 M bis 3 M; H₂SO₄ als Stützelektrolyt mit einer Konzentration von 3 M bis 5 M; oder
Schema 5: NaI und/oder KI als iodbasierte aktive Substanz mit einer Konzentration von 1 M bis 6 M; HBr und/oder HCl als Additiv mit einer Konzentration von 1 M bis 3 M; H₂SO₄ als Stützelektrolyt mit einer Konzentration von 2 M bis 4 M; CdSO₄ als aktive Substanz von Cd mit einer Konzentration von 1 M bis 3 M; oder
Schema 6: NaI und/oder KI als iodbasierte aktive Substanz mit einer Konzentration von 1 M bis 6 M; eine oder zwei oder mehrere der Substanzen aus der Gruppe NaBr, KBr, NaCl und KCl als Additiv mit einer Konzentration von 1 M bis 3 M; H₂SO₄ als Stützelektrolyt mit einer Konzentration von 3 M bis 5 M; CdSO₄ als aktive Substanz von Cd mit einer Konzentration von 1 M bis 3 M.

4. Batterie nach Anspruch 3, wobei eine Zusammensetzung des positiven Elektrolyten und des negativen Elektrolyten ausgewählt ist aus einem der folgenden sechs Schemata:
Schema 1: HI verwendet als iodbasierte aktive Substanz mit einer Konzentration von 6 M; HBr und/oder HCl verwendet als Additiv mit einer Konzentration von 3 M;
H₂SO₄ verwendet als Stützelektrolyt mit einer Konzentration von 1 M; CdSO₄ verwendet als aktive Substanz von Cd mit einer Konzentration von 3 M; oder
Schema 2: HI verwendet als iodbasierte aktive Substanz mit einer Konzentration von 6 M; eine oder zwei oder mehrere der Substanzen aus der Gruppe NaBr, KBr, NaCl und KCl verwendet als Additiv mit einer Konzentration von 3 M; H₂SO₄ verwendet als Stützelektrolyt mit einer Konzentration von 2 M; CdSO₄ verwendet als aktive Substanz von Cd mit einer Konzentration von 3 M; oder
Schema 3: CdI₂ verwendet als aktive Substanz mit einer Konzentration von 3 M; HBr und/oder HCl verwendet als Additiv mit einer Konzentration von 3 M; H₂SO₄ verwendet als Stützelektrolyt mit einer Konzentration von 4 M; oder
Schema 4: CdI₂ verwendet als aktive Substanz mit einer Konzentration von 3 M; eine oder zwei oder mehrere der Substanzen aus der Gruppe NaBr, KBr, NaCl und KCl verwendet als Additiv mit einer Konzentration von 3 M; H₂SO₄ verwendet als Stützelektrolyt mit einer Konzentration von 5 M; oder
Schema 5: NaI und/oder KI verwendet als iodbasierte aktive Substanz mit einer Konzentration von 6 M; HBr und/oder HCl verwendet als Additiv mit einer Konzentration von 3 M; H₂SO₄ verwendet als Stützelektrolyt mit einer Konzentration von 4 M; CdSO₄ verwendet als aktive Substanz von Cd mit einer Konzentration von 3 M; oder
Schema 6: NaI und/oder KI verwendet als iodbasierte aktive Substanz mit einer Konzentration von 6 M; eine oder zwei oder mehrere der Substanzen aus der Gruppe NaBr, KBr, NaCl und KCl verwendet als Additiv mit einer Konzentration von 3 M; H₂SO₄ verwendet als Stützelektrolyt mit einer Konzentration von 5 M;
CdSO₄ verwendet als aktive Substanz von Cd mit einer Konzentration von 3 M.

5. Batterie nach einem der Ansprüche 1 bis 4, wobei die Batterie eine positive Elektrode, eine negative Elektrode, ein Membranmaterial und den Elektrolyten umfasst, wobei das Membranmaterial ein Polymermaterial ist, ausgewählt aus einem oder mehreren von PES, PVC, PSF, PE und Nafion.

6. Batterie nach Anspruch 1, wobei die Batterie Einzelzelle oder Stapel umfasst;
eine Struktur der Einzelzelle umfasst eine positive Anschlussplatte, einen positiven Stromkollektor, eine positive Kohlenfilzelektrode, gefüllt mit dem positiven Elektrolyten, einen Separator, eine negative Kohlenfilzelektrode, gefüllt mit dem negativen Elektrolyten, einen negativen Stromkollektor und eine negative Anschlussplatte, die in dieser Reihenfolge gestapelt sind;
der Stapel ist aus zwei oder mehr Einzelzellschaltungen in Reihe und/oder parallel zusammengesetzt.

## Revendications

1. Batterie aqueuse à base d'iode reposant sur un transfert multi-électronique, comprenant un électrolyte positif et un électrolyte négatif, l'électrolyte positif et l'électrolyte négatif comprenant tous deux des solutions aqueuses fortement acides contenant du Cd²⁺ et I⁻, ainsi qu'un additif source de Br⁻ et/ou CI⁻ ;
dans laquelle une source de I⁻ dans l'électrolyte positif et l'électrolyte négatif est choisie parmi un ou plusieurs de HI, KI, Nal et CdI₂ ; une source de Cd²⁺ est choisie parmi l'un ou les deux de CdI₂ ou CdSO₄ ; et un électrolyte de support dans les électrolytes est H₂SO₄ ;
dans laquelle, dans l'électrolyte positif ou l'électrolyte négatif, une concentration molaire de Cd²⁺ est de 0,5 M à 3 M, une concentration molaire de I⁻ est de 1 M à 6 M, un rapport molaire de Cd²⁺ à I⁻ est de 1:2 à 1:1, et une concentration molaire de H⁺ est de 3 M à 12 M ; et
dans laquelle l'additif source de Br⁻ est choisi parmi un ou plusieurs de NaBr, KBr ou HBr ; l'additif source de Cl⁻ est choisi parmi un ou plusieurs de NaCl, KCI ou HCl, avec une concentration molaire totale des additifs de 1 M à 3 M.

2. Batterie selon la revendication 1, dans laquelle le rapport molaire de Cd²⁺ à I⁻ est de 1:2.

3. Batterie selon la revendication 1, dans laquelle une composition de l'électrolyte positif et de l'électrolyte négatif est choisie parmi l'un des six schémas suivants :
Schéma 1 : HI comme substance active à base d'iode avec une concentration de 1 M à 6 M ; HBr et/ou HCl comme additif avec une concentration de 1 M à 3 M ;
H₂SO₄ comme électrolyte de support avec une concentration de 1 M à 3 M ; CdSO₄ comme substance active de Cd avec une concentration de 1 M à 3 M ; ou
Schéma 2 : HI comme substance active à base d'iode avec une concentration de 1 M à 6 M ; un ou deux ou plus de NaBr, KBr, NaCl et KCl comme additif avec une concentration de 1 M à 3 M ; H₂SO₄ comme électrolyte de support avec une concentration de 2 M à 4 M ; CdSO₄ comme substance active de Cd avec une concentration de 1 M à 3 M ; ou
Schéma 3 : CdI₂ comme substance active avec une concentration de 0,5 M à 3 M ;
HBr et/ou HCl comme additif avec une concentration de 1 M à 3 M ; H₂SO₄ comme électrolyte de support avec une concentration de 2 M à 4 M ; ou
Schéma 4 : CdI₂ comme substance active avec une concentration de 0,5 M à 3 M ;
un ou deux ou plus de NaBr, KBr, NaCl et KCI comme additif avec une concentration de 1 M à 3 M ; H₂SO₄ comme électrolyte de support avec une concentration de 3 M à 5 M ; ou
Schéma 5 : Nal et/ou KI comme substance active à base d'iode avec une concentration de 1 M à 6 M ; HBr et/ou HCl comme additif avec une concentration de 1 M à 3 M ; H₂SO₄ comme électrolyte de support avec une concentration de 2 M à 4 M ; CdSO₄ comme substance active de Cd avec une concentration de 1 M à 3 M ; ou
Schéma 6 : Nal et/ou KI comme substance active à base d'iode avec une concentration de 1 M à 6 M ; un ou deux ou plus de NaBr, KBr, NaCl et KCl comme additif avec une concentration de 1 M à 3 M ; H₂SO₄ comme électrolyte de support avec une concentration de 3 M à 5 M ; CdSO₄ comme substance active de Cd avec une concentration de 1 M à 3 M.

4. Batterie selon la revendication 3, dans laquelle une composition de l'électrolyte positif et de l'électrolyte négatif est choisie parmi l'un des six schémas suivants :
Schéma 1 : HI utilisé comme substance active à base d'iode avec une concentration de 6 M ; HBr et/ou HCl utilisés comme additif avec une concentration de 3 M ; H₂SO₄ utilisé comme électrolyte de support avec une concentration de 1 M ; CdSO₄ utilisé comme substance active de Cd avec une concentration de 3 M ; ou
Schéma 2 : HI utilisé comme substance active à base d'iode avec une concentration de 6 M ; un ou deux ou plus de NaBr, KBr, NaCl et KCI utilisés comme additif avec une concentration de 3 M ; H₂SO₄ utilisé comme électrolyte de support avec une concentration de 2 M ; CdSO₄ utilisé comme substance active de Cd avec une concentration de 3 M ; ou
Schéma 3 : CdI₂ utilisé comme substance active avec une concentration de 3 M ;
HBr et/ou HCl utilisés comme additif avec une concentration de 3 M ; H₂SO₄ utilisé comme électrolyte de support avec une concentration de 4 M ; ou
Schéma 4 : CdI₂ utilisé comme substance active avec une concentration de 3 M ;
un ou deux ou plus de NaBr, KBr, NaCl et KCl utilisés comme additif avec une concentration de 3 M ; H₂SO₄ utilisé comme électrolyte de support avec une concentration de 5 M ; ou
Schéma 5 : NaI et/ou KI utilisés comme substance active à base d'iode avec une concentration de 6 M ; HBr et/ou HCl utilisés comme additif avec une concentration de 3 M ; H₂SO₄ utilisé comme électrolyte de support avec une concentration de 4 M ; CdSO₄ utilisé comme substance active de Cd avec une concentration de 3 M ; ou
Schéma 6 : NaI et/ou KI utilisés comme substance active à base d'iode avec une concentration de 6 M ; un ou deux ou plus de NaBr, KBr, NaCl et KCl utilisés comme additif avec une concentration de 3 M ; H₂SO₄ utilisé comme électrolyte de support avec une concentration de 5 M ; CdSO₄ utilisé comme substance active de Cd avec une concentration de 3 M.

5. Batterie selon l'une quelconque des revendications 1 à 4, dans laquelle la batterie comprend une électrode positive, une électrode négative, un matériau membranaire et l'électrolyte, le matériau membranaire étant un matériau polymère choisi parmi un ou plusieurs de PES, PVC, PSF, PE et Nafion.

6. Batterie selon la revendication 1, dans laquelle la batterie comprend une cellule unique ou des empilements ;
une structure de la cellule unique comprend une plaque de borne positive, un collecteur de courant positif, une électrode positive en feutre de carbone remplie de l'électrolyte positif, un séparateur, une électrode négative en feutre de carbone remplie de l'électrolyte négatif, un collecteur de courant négatif et une plaque de borne négative empilés en séquence ;
l'empilement est composé de deux ou plusieurs circuits de cellules uniques montés en série et/ou en parallèle.
